# EUROPEAN PATENT APPLICATION

(11) **EP 4 412 240 A1**
(43) Date of publication of application: **07.08.2024**
(21) Application number: 22872221.1
(22) Date of filing: 26.09.2022
(51) Int. Cl.: H04R 1/08

(54) **IN-VEHICLE MICROPHONE AND VEHICLE**

(30) Priority: 27.09.2021 CN 202122354757 U
(71) Applicant: Beijing Co Wheels Technology Co., Ltd, Beijing 101300 (CN)
(72) Inventor: ZHANG, Daolin, Beijing 101300 (CN)
(74) Representative: Maiwald GmbH
(86) International application number: PCT/CN2022/121373
(87) International publication number: WO 2023/046178

(57) **Abstract**

Provided are an in-vehicle microphone and a vehicle. The in-vehicle microphone includes: a housing defined an accommodating cavity, a sound receiving hole being defined on the housing, and the sound receiving hole being in communication with the accommodating cavity; a sound pickup arranged in the accommodating cavity; and a sound insulation member surrounding at least the sound pickup, a through hole in communication with the sound receiving hole being defined on the sound insulation member.

## Description

### CROSS-REFERENCE TO RELATED APPLICATION

This application claims priority to Chinese Patent Application Serial No. 202122354757.9, filed on September 27, 2021, the entire content of which is incorporated herein by reference.

### FIELD

The present disclosure relates to the field of transportation tool designs, and more particularly to an in-vehicle microphone and a vehicle.

### BACKGROUND

In-vehicle microphones, as commonly used audio input devices, are generally installed in vehicles. For driving safety and comfort, Bluetooth in-vehicle hands-free systems are generally installed in the vehicles, and users may make calls through the in-vehicle microphones.

Usually, the in-vehicle microphone is installed on a roof, an instrument panel, or other locations in the vehicle. In the process of driving, the noise around the installation location of the in-vehicle microphone is easily transmitted to the in-vehicle microphone. Therefore, how to reduce the noise transmitted into the in-vehicle microphone is an urgent problem to be solved.

### SUMMARY

The present disclosure provides an in-vehicle microphone and a vehicle.

Embodiments of the present disclosure provide an in-vehicle microphone, including:
a housing having an accommodating cavity, the housing defining a sound receiving hole in communication with the accommodating cavity;
a sound pickup arranged in the accommodating cavity; and
a sound insulation member at least surrounding the sound pickup, the sound insulation member defining a through hole in communication with the sound receiving hole.

In some embodiments, the through hole is arranged directly opposite to the sound receiving hole, or the through hole is arranged partially opposite to the sound receiving hole.

In some embodiments, the sound insulation member is located at an outer side of the housing to surround the housing.

In some embodiments, the sound insulation member is located in the accommodating cavity, and the sound insulation member surrounds the sound pickup.

In some embodiments, the sound insulation member is fitted to at least part of an outer surface of the housing.

In some embodiments, the sound insulation member comprises a first sound insulation member and a second sound insulation member, the first sound insulation member and the second sound insulation member abut against each other to enclose a sound insulation cavity, and at least the sound pickup is located in the sound insulation cavity.

In some embodiments, at least one of the first sound insulation member and the second sound insulation member is an elastic buffer member.

In some embodiments, the housing comprises a first housing and a second housing, the first housing is detachably connected to the second housing, and the first housing is connected to the second housing to define the accommodating cavity.

In some embodiments, the first sound insulation member or the second sound insulation member wraps a joint of the first housing and the second housing.

In some embodiments, a buffer layer is arranged between the first housing and/or the second housing and an inner wall of the sound insulation member.

Another aspect of embodiments of the present disclosure further provides a vehicle, including a vehicle body, and an in-vehicle microphone according to any one of the above embodiments installed inside the vehicle body.

In the in-vehicle microphone and the vehicle in embodiments of the present disclosure, the sound insulation member is arranged on the in-vehicle microphone, the sound insulation member surrounds the sound pickup, only the sound receiving hole is exposed, and fundamentally the sound insulation member is made of sound insulation materials, which may block the noise transmitted from the installation position of the in-vehicle microphone into the in-vehicle microphone. As a result, the voice wake-up rate and recognition rate may be effectively improved, thereby improving the user experience.

### BRIEF DESCRIPTION OF THE DRAWINGS

In order to more clearly explain the technical solution of embodiments of the present disclosure or the related art, the drawings required to be used in the description of embodiments or the related art will be briefly described below, and it is obvious that for those skilled in the art, the drawings described below are some embodiments of the present disclosure, other drawings may be obtained according to these drawings without creative labor.
FIG. 1 is a perspective schematic view of an in-vehicle microphone provided in an embodiment of the present disclosure.
FIG. 2 is an exploded schematic view of an in-vehicle microphone provided in an embodiment of the present disclosure.

### DETAILED DESCRIPTION

The technical solution in embodiments of the present disclosure will be clearly and completely described below in combination with the drawings in the embodiments of the present disclosure. It is apparent that the described embodiments are merely part of embodiments of the present disclosure, but not all of embodiments. Based on the embodiments in the present disclosure, all other embodiments obtained by those skilled in the art without creative work fall within the protection scope of the present disclosure.

The "include" mentioned in the description and claims is an open-ended term and should be interpreted as "include, but not limited to". "Approximately" refers to the fact that, within the acceptable error range, those skilled in the art may solve the technical problem within a certain error range, and the technical effect is substantially achieved.

In addition, the term "connect" herein includes any direct and indirect means of connection. Therefore, if the content describes that a first device is connected to a second device, it means that the first device may be directly connected to the second device, or be indirectly connected to the second device via other devices. The subsequent description in the specification is the preferred embodiments for implementing the present disclosure, but the description is for the purpose of illustrating the general principles of the present disclosure and is not intended to limit the scope of the present disclosure. The protection scope of the present disclosure shall be subj ect to the definition of the appended claims.

It should be understood that the term "and/or" used herein is merely an association relationship describing the associated objects, indicating that there may be three kinds of relationships. For example, A and/or B may indicate the existence of A alone, the coexistence of A and B, and the existence of B alone. In addition, the character "/" herein generally indicates that the relationship between the associated objects before and after it is an "or" relationship.

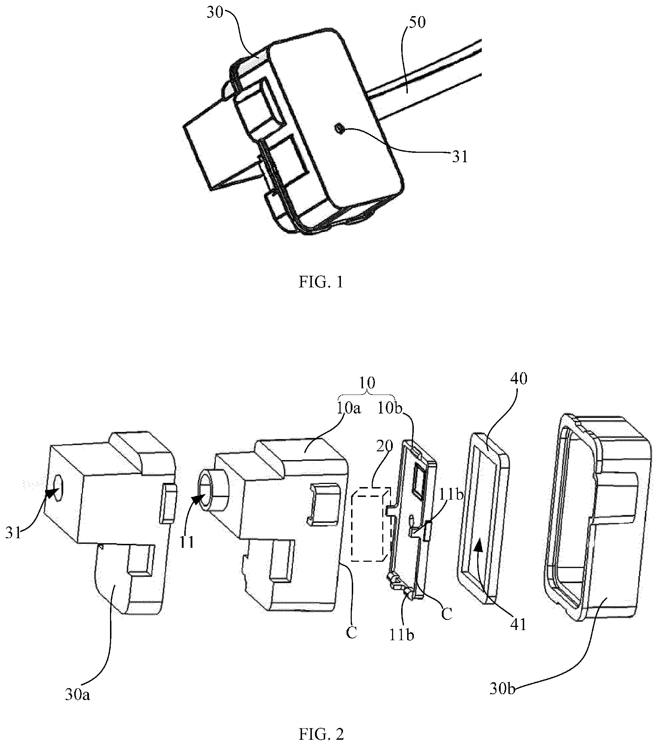

FIG. 1 is a perspective schematic view of an in-vehicle microphone provided in an embodiment of the present disclosure; FIG. 2 is an exploded schematic diagram of an in-vehicle microphone provided in an embodiment of the present disclosure. Referring to FIGS. 1 to 2, the in-vehicle microphone provided in the embodiments includes: a housing 10, a sound pickup 20, and a sound insulation member 30.

The housing 10 may be made of hard materials, such as a hard plastic, a metal, or other materials. The housing 10 has an accommodating cavity (not shown in figures), the housing 10 defines a sound receiving hole 11, and the sound receiving hole 11 is in communication with the accommodating cavity.

The sound pickup 20 is arranged in the accommodating cavity, and the sound pickup 20 is a device configured to collect the ambient sound on site and then transmit it to a back-end device. Specifically, it may include a circuit board and a microphone module. The microphone module may be a digital microphone, which converts traditional analog audio signals into digital signals for processing and transmission. The circuit board may be provided with an audio amplification circuit for amplifying the audio signals, to achieve better sound quality.

In some specific embodiments, the sound pickup 20 may be fixedly connected to the housing 10, such as, snap-fitted by a snap or detachably connected by a fastener. In some embodiments, the sound pickup 20 may also be directly tightly fitted with a cavity wall of the accommodating cavity, so that the sound pickup 20 is fastened tightly by the cavity wall of the accommodating cavity, so that the sound pickup 20 will not shake or swing in the accommodating cavity in the process of driving of the vehicle. Of course, in some embodiments, the sound pickup 20 may also be directly accommodated in the accommodating cavity of the housing 10, which is not specially limited in the present disclosure.

The sound insulation member 30 at least surrounds the sound pickup 20, and the sound insulation member 30 defines a through hole 31 in communication with the sound receiving hole 11. In some specific embodiments, the sound insulation member 30 may include but is not limited to at least one of a soft rubber, a sound-absorbing cotton, a wood wool sound-absorbing board, and a sound insulation board. The above materials have a basic sound insulation function, which may effectively block external noise from entering the sound pickup 20. In some embodiments, the sound insulation member 30 may be an elastic buffer member, for example, the sound insulation member 30 is a soft rubber. The elastic buffer member may generate a certain resistance, and isolate external vibration from being transmitted to the sound pickup 20. Therefore, on the basis of being able to isolate external noise, the risk of the sound pickup 20 picking up noise other than human voice is further reduced by isolating external vibration.

In addition, it should be noted that, the sound insulation member 30 at least surrounds the sound pickup 20, including the sound insulation member 30 only surrounding a periphery of the sound pickup 20, and also including the sound insulation member 30 surrounding the sound pickup 20 and other components.

Specifically, in some embodiments, the sound insulation member 30 may be located at an outer side of the housing 10 to surround the housing 10. Since the sound pickup 20 is arranged in the accommodating cavity of the housing 10, the sound insulation member 30 surrounds the sound pickup 20 and the housing 10 together, and only the sound insulation member 30 may be visually seen in appearance. Furthermore, on basis of the sound insulation member 30 as the elastic buffer member, the elastic buffer member surrounds the entire housing 10. Therefore, when the entire in-vehicle microphone is installed in a vehicle body, the elastic buffer member is directly in contact with a wall surface of the vehicle body, for example, the elastic buffer member is in compression contact with a roof of the vehicle, which may also buffer the vibration transmitted by the roof of the vehicle to some extent, and further optimize the sound insulation effect. Moreover, since the elastic buffer member has elasticity and the elastic buffer member is connected to the wall surface of the vehicle body, under the action of a pre-tightening force of the elastic buffer member, the reliability and stability of the connection between the in-vehicle microphone overall and the vehicle body may be further improved, and it is not easy to loosen during use. A hard microphone is wrapped inside the sound insulation member 30, and only the through hole 31 in communication with the sound receiving hole 11 is reserved, which effectively reduces the input of sound generated by the vibration in the vehicle, thereby improving the signal-to-noise ratio of the in-vehicle microphone.

In some embodiments, the sound insulation member 30 may also be directly located in the accommodating cavity, and the sound insulation member 30 surrounds the sound pickup. In appearance, the entire sound insulation member 30 is surrounded by the housing 10 without being exposed. The housing 10 is directly connected and fixed to the wall surface of the vehicle body, which may also achieve noise reduction effect on the in-vehicle microphone and improve the user experience.

In the in-vehicle microphone provided in the embodiments, the sound insulation member made of sound insulation materials is arranged on the in-vehicle microphone, the sound insulation member surrounds the sound pickup, and only the sound receiving hole is exposed, which may fundamentally block the noise transmitted from the installation position of the in-vehicle microphone into the in-vehicle microphone. As a result, the voice wake-up rate and recognition rate may be effectively improved, thereby improving the user experience.

Based on the above-described, in some embodiments, the through hole 31 may be arranged directly opposite to the sound receiving hole 11, or the through hole 31 may be arranged partially opposite to the sound receiving hole 11.

It is worth noting that a cross-sectional shape of the through hole 31 in the sound insulation member 30 in the present disclosure is not limited, which may be circular, square, oval, hexagonal, or even special-shaped, etc., while a cross-sectional shape of the sound receiving hole 11 is also not limited, which may specifically be any shape mentioned above or other shapes. Moreover, the cross-sectional shapes of the through hole 31 and the sound receiving hole 11 may be the same or different, as long as the air medium may pass through the sound receiving hole 11 and through hole 31.

The through hole 31 is arranged directly opposite to the sound receiving hole 11, which means that in an installation state, a central axis of the through hole 31 coincides with a central axis of the sound receiving hole 11. In this way, the expected sound receiving effect may be ensured with defining a smaller through hole 31. It may be understood that the smaller the area occupied by through hole 31 on the sound insulation member 30, the better the sound insulation function of the sound insulation member 30. Furthermore, the through hole 31 is arranged directly opposite to the sound receiving hole 11, which may ensure that a smallest through hole 31 is defined in the sound insulation member 30 to achieve better sound receiving effect.

The through hole 31 is arranged partially opposite to the sound receiving hole 11, which means that the central axis of the through hole 31 is at a certain distance from the central axis of the sound receiving hole 11, but a cross section of the through hole 31 overlaps with a cross section of the sound receiving hole 11 in axial projection, so that both the through hole 31 and the sound receiving hole 11 may communicate directly.

Regardless of the through hole 31 and the sound receiving hole 11 are arranged directly opposite or partially opposite, the air flow may be allowed to directly enter the sound pickup 20 along a shortest path, thus ensuring the better sound pickup effect and efficiency.

Of course, in some embodiments, the through hole 31 may be arranged not opposite to the sound receiving hole 11, but the through hole 31 and the sound receiving hole 11 may be communicated through the accommodating cavity of the housing 10, which may also allow external sound to enter the sound pickup 20 through the through hole 31, the accommodating cavity, and the sound receiving hole 11.

Those skilled in the art may design the relative positions of through hole 31 and the sound receiving hole 11 according to actual needs, which is not specially limited in the embodiments of the present disclosure.

In some embodiments, the sound insulation member 30 may be fitted to at least part of the outer surface of the housing 10. The sound insulation member 30 may be fitted and covered on at least part of the housing 10, and a gap between the sound insulation member 30 and the housing 10 is minimized or canceled. Therefore, while reducing the noise of the microphone, the overall volume of the microphone may be reduced, the space inside the vehicle is occupied as little as possible, and the aesthetics of the appearance is improved.

In the embodiments of the present disclosure, the housing 10 may include a first housing 10a and a second housing 10b, the first housing 10a may be detachably connected to the second housing 10b, and the first housing 10a is connected to the second housing 10b to define the accommodating cavity. In some embodiments, the first housing 10a may have a box shape, the second housing 10b may have a lid shape, or both the first housing 10a and the second housing 10b may have the box shape. The first housing 10a abuts against the second housing 10b, which may be detachably connected by a snap, a screw, and etc., to facilitate the removal, disassembly, and maintenance of the sound pickup 20.

Based on the housing 10 including the first housing 10a and the second housing 10b, the sound insulation member 30 may be fitted and covered on outer surfaces of the first housing 10a and the second housing 10b, to wrap the first housing 10a and the second housing 10b together, which may further ensure the stability and reliability of connection therebetween.

Continue to refer to FIG. 2, in some embodiments, the sound insulation member 30 may include a first sound insulation member 30a and a second sound insulation member 30b. The first sound insulation member 30a and the second sound insulation member 30b may abut against each other, to enclose a sound insulation cavity, and at least the sound pickup 20 is located in the sound insulation cavity. The first sound insulation member 30a and the second sound insulation member 30b abut against each other, including direct contact and butt-joint of end faces of the first sound insulation member 30a and the second sound insulation member 30b, and the first sound insulation member 30a and the second sound insulation member 30b may be tightly wrapped the housing 10 respectively, which ensures the connection tightness and sealing between the sound insulation member 30 and the housing 10.

In other embodiments, the first sound insulation member 30a and the second sound insulation member 30b may also include a lateral overlapping part therebetween, for example, the first sound insulation member 30a may be sleeved on an outer side of the second sound insulation member 30b. Since the first sound insulation member 30a is sleeved on the outer side of the second sound insulation member 30b, the first sound insulation member 30a may be fitted and in contact with the second sound insulation member 30b laterally, thereby minimizing a gap of the joint of the first sound insulation member 30a and the second sound insulation member 30b, and improving the sealing performance of the entire in-vehicle microphone.

Furthermore, the first sound insulation member 30a or the second sound insulation member 30b may wrap the joint of the first housing 10a and the second housing 10b. In some embodiments, as shown in FIG. 2, the second housing 10b has a snap 11b. The snap 11b is snapped into a corresponding slot of the first housing 10a to connect the first housing 10a and the second housing 10b. At the same time, the first housing 10a and the second housing 10b have abutment surfaces C abutting against each other, and in an abutting state, the abutting point of the abutment surfaces C forms the joint of the first housing 10a and the second housing 10b. Moreover, the first sound insulation member 30a or the second sound insulation member 30b wraps the joint of the first housing 10a and the second housing 10b, so that the joint is firmly fixed, and the gap of the joint may be sealed to a certain extent.

In the present embodiment, the first sound insulation member 30a and the second sound insulation member 30b each may be the elastic buffer member. In other embodiments, one of the first sound insulation member 30a and the second sound insulation member 30b is the elastic buffer member, and the other may be made of other sound insulation materials, such as other hard sound insulation materials, e.g., the sound insulation board. As long as one of the sound insulation members is the elastic buffer member, the sealing between the first sound insulation member 30a and the second sound insulation member 30b may be guaranteed.

In some embodiments, when the second sound insulation member 30b is the elastic buffer member, the second sound insulation member 30b may wrap the joint of the first housing 10a and the second housing 10b, so that in a connected state, the deformation of the elastic buffer member may be squeezed and filled in the gap of the joint of the first housing 10a and the second housing 10b, thus ensuring the sealing between the first housing 10a and the second housing 10b.

Furthermore, a buffer layer 40 may be arranged between the first housing 10a and/or the second housing 10b and an inner wall of the sound insulation member 30. In some specific embodiments, the buffer layer 40 may be a vibration absorption pad, and its preparation material may include but is not limited to a foam, a rubber, a flexible fabric, etc. By arranging the buffer layer 40 between the first housing 10a and/or the second housing 10b and the inner wall of the sound insulation member 30, the buffer layer 40 fills a gap between the housing 10 and the sound insulation member 30, so that the housing 10 is tightly fitted with the sound insulation member 30, further improving the vibration absorption effect while ensuring sealing performance.

The buffer layer 40 shown in FIG. 2 is arranged between the second housing 10b and the second sound insulation member 30b, and the buffer layer 40 does not block the sound receiving hole 11 and the through hole 31. In other embodiments, based on the presence of the buffer layer 40 between the first housing 10a and the first sound insulation member 30a, the buffer layer 40 may have a hollow portion 41; in the installation state, the sound receiving holes 11 and the through hole 31 may be in communication with the hollow portion 41, so that the arrangement of the buffer layer 40 will not block the sound receiving hole 11 and the through hole 31, thus ensuring normal sound receiving effect.

In addition, please refer to FIG. 1, the in-vehicle microphone provided in embodiments of the present disclosure further includes a connecting wire 50, one end of the connecting wire 50 may be connected to the sound pickup 20, and the other end may be configured to connect a horn, a speaker or the like in the vehicle, so that the sound collected by the microphone may be played out through the horn or the speaker, which is convenient for users to make voice calls through external playback in the process of driving.

Embodiments of the present disclosure further provide a vehicle, including a vehicle body, and an in-vehicle microphone as the provided in the above embodiments of the present disclosure installed inside the vehicle body.

In some specific embodiments, in some application scenarios, the in-vehicle microphone may be installed on the roof of the vehicle, or on the instrument panel, or on an inner wall of the vehicle body.

It should be noted that the structure and function of the in-vehicle microphone in the vehicle provided in the embodiments are the same as those in the above embodiments, which may specifically refer to the description of the above embodiments for details, and will not be repeated in the embodiments.

It should be noted that, without contradiction, those skilled in the art may combine and unite different embodiments or examples or features of the different embodiments or examples described in this specification.

Finally, it should be noted that the above embodiments are only used to illustrate the technical solution of the present disclosure but not to limit; although the present disclosure has be explained in detail with reference to the aforementioned embodiments, those skilled in the art should understand that they may still modify the technical solutions mentioned in the aforementioned embodiments, or equivalently replace part of the technical features thereof; and these modifications or replacements do not make the essence of the corresponding technical solutions deviate from the spirit and scope of the technical solutions in the embodiment of the present disclosure.

All embodiments of the present disclosure may be implemented independently or in combination with other embodiments, which are all regarded as the scope of protection required by the present disclosure.

## Claims

1. An in-vehicle microphone, comprising:
a housing having an accommodating cavity, the housing defining a sound receiving hole in communication with the accommodating cavity;
a sound pickup arranged in the accommodating cavity; and
a sound insulation member at least surrounding the sound pickup, the sound insulation member defining a through hole in communication with the sound receiving hole.

2. The in-vehicle microphone according to claim 1, wherein the through hole is arranged directly opposite to the sound receiving hole, or the through hole is arranged partially opposite to the sound receiving hole.

3. The in-vehicle microphone according to claim 1 or 2, wherein the sound insulation member is located at an outer side of the housing to surround the housing.

4. The in-vehicle microphone according to any one of claims 1 to 3, wherein the sound insulation member is located in the accommodating cavity, and the sound insulation member surrounds the sound pickup.

5. The in-vehicle microphone according to any one of claims 1 to 4, wherein the sound insulation member is fitted to at least part of an outer surface of the housing.

6. The in-vehicle microphone according to any one of claims 1 to 5, wherein the sound insulation member comprises a first sound insulation member and a second sound insulation member, the first sound insulation member and the second sound insulation member abut against each other to enclose a sound insulation cavity, and at least the sound pickup is located in the sound insulation cavity.

7. The in-vehicle microphone according to claim 6, wherein at least one of the first sound insulation member and the second sound insulation member is an elastic buffer member.

8. The in-vehicle microphone according to any one of claims 1 to 7, wherein the housing comprises a first housing and a second housing, the first housing is detachably connected to the second housing, and the first housing is connected to the second housing to define the accommodating cavity.

9. The in-vehicle microphone according to claim 8, wherein the first sound insulation member or the second sound insulation member wraps a joint of the first housing and the second housing.

10. The in-vehicle microphone according to claim 8 or 9, wherein a buffer layer is arranged between the first housing and/or the second housing and an inner wall of the sound insulation member.

11. A vehicle, comprising a vehicle body, and an in-vehicle microphone according to any one of claims 1 to 10 installed inside the vehicle body.
